# EUROPEAN PATENT APPLICATION

(11) **EP 4 821 687 A1**
(43) Date of publication of application: **14.10.2026**
(21) Application number: 26170912.5
(22) Date of filing: 07.04.2026
(51) Int. Cl.: B41J 2/17, B41J 2/165

(54) **INKJET RECORDING APPARATUS**

(30) Priority: 07.04.2025 JP 2025062898
(71) Applicant: Kyocera Document Solutions Inc., Osaka-shi, Osaka 540-8585 (JP)
(72) Inventor: KAWAMATA, Shuhei, Osaka, 540-8585 (JP); YANO, Yuko, Osaka, 540-8585 (JP); Shunsuke, YAMASAKI, Osaka, 540-8585 (JP); INUI, Yasutaka, Osaka, 540-8585 (JP); FURUKAWA, Noriaki, Osaka, 540-8585 (JP)
(74) Representative: BRP Renaud & Partner mbB Rechtsanwälte Patentanwälte Steuerberater

(57) **Abstract**

An inkjet recording apparatus (100) includes a recording head (17a to 17c), an ink collection tray (80), and a detection portion (86). The detection portion (86) has a detection depressed portion (91) that extends downward from the upper surface of the ink collection tray (80), a sensor portion (94) that is provided at a position below a detection height (h1) in the detection depressed portion (91) and that detects contact of the sensor portion (94) with the liquid (L1) flowing into the detection depressed portion (91), and a first wall portion (92) that is formed to surround the detection depressed portion (91) and that prevents the liquid (L1) from entering the detection depressed portion (91) from the ink collection tray (80). The first wall portion (92) has an inlet (95) formed at the detection height (h1) to allow the liquid (L1) to flow from the ink collection tray (80) to the detection depressed portion (91).

## Description

### BACKGROUND

The present disclosure relates to an inkjet recording apparatus.

As recording apparatuses such as facsimile machines, multifunction peripherals, and printers, inkjet recording apparatuses are widely used that form an image by ejecting ink to a recording medium (e.g., sheets of paper, OHP sheets, and the like).

Such inkjet recording apparatuses generally include a recording head, an ink ejecting nozzle, and an ink collection tray. The recording head has an ink ejection surface from which ink is ejected. The ink ejection surface has an opening for ejecting ink. The ink ejecting nozzle is connected to the opening and supplies ink through the opening to the ink ejection surface. The ink collection tray is a tray that can store liquid containing the ink falling from the recording head.

The inkjet recording apparatus performs recovery operation with predetermined timing (such as when starting printing after a long period of inactivity and during intervals between printing sessions) in preparation for subsequent printing. Recovery operation is operation for cleaning the tip of the recording head (more specifically, the ink ejection surface). Specifically, the operation proceeds as follows.

Ink is forcibly pushed out of the ink ejecting nozzle (purging). Pushing out ink allows thickened ink, air bubbles, foreign matter, and the like in the nozzle to be discharged. Furthermore, the pushed-out ink redissolves the mist (ink residue) attached to the ink ejection surface. And after the ink is pushed out, the ink attached to the ink ejection surface (nozzle face) is wiped off with a blade-form wiper. Performing the recovery operation helps prevent clogging of the opening in the ink ejection surface and the ink ejecting nozzle.

The ink wiped off by the wiper falls onto the ink collection tray to be collected and discharged from the ink collection tray as waste liquid. However, the ink that has fallen on the ink collection tray dries and loses its fluidity. The ink with reduced fluidity collects on the ink collection tray and attaches to a conveying belt, contaminating the recording medium. Furthermore, solidified ink may clog the ink discharge passage and cause contamination or failure inside the device.

To prevent a clog in an ink discharge passage, one inkjet recording apparatus is configured as follows. This inkjet recording apparatus has a waste ink tray and an ink detection portion. The waste ink tray has an ink inlet portion. The ink inlet portion includes a first inlet through which ink flows in from the ink collection tray, and a second inlet disposed at a position above the first inlet. The ink detection portion includes an ink detection portion that detects the presence or absence of ink that has flowed into the second inlet. When the detection portion detects ink flowing into the second inlet, it detects a blockage (an ink clog or the like) in the first inlet.

On detecting a blockage in the first inlet, the ink detection portion outputs a detection signal to a control portion in the inkjet recording apparatus. In response to the detection signal, the control portion suspends ink ejection from the recording head. The control portion then conveys to an operation screen or the like the detection of a blockage in the ink discharge passage. Recognizing the detection, the operator can perform maintenance to clear the blockage in the ink discharge passage. Thus, even if the ink discharge passage is clogged, it is possible to prevent the amount of ink stored in the ink collection tray from exceeding a predetermined amount to prevent ink from overflowing out of the ink collection tray.

### SUMMARY

An object of the present disclosure is to provide an inkjet recording apparatus that helps prevent false detection by an ink detection portion.

According to one aspect of the present disclosure, an inkjet recording apparatus includes a recording head, an ink collection tray, and a detection portion. The recording head has an ink ejection surface from which ink is ejected. The ink collection tray is disposed at a position facing the ink ejection surface during recovery operation for the recording head and can store liquid containing ink falling from the recording head. The detection portion detects the liquid surface of the liquid stored in the ink collection tray exceeding a predetermined detection height. The detection portion has a detection depressed portion that extends downward from the upper surface of the ink collection tray, a sensor portion that is provided at a position below the detection height in the detection depressed portion and that detects contact of the sensor portion with the liquid flowing into the detection depressed portion, and a first wall portion that is formed to surround the detection depressed portion and that prevents the liquid from entering the detection depressed portion from the ink collection tray. The first wall portion has an inlet formed at the detection height to allow the liquid to flow from the ink collection tray to the detection depressed portion.

### BRIEF DESCRIPTION OF THE DRAWINGS

Fig. 1 is a side sectional view showing an outline of the construction of a printer 100 according to a first embodiment of the present invention.
Fig. 2 is a block diagram showing the configuration of a control portion 110.
Fig. 3 is a plan view of a recording portion 9.
Fig. 4 is a perspective view of the recording portion 9 as seen from above.
Fig. 5 is a side view of a recording head 17a to 17c.
Fig. 6 is a plan view of the recording head 17a to 17c as seen from an ink ejection surface F1 side.
Fig. 7 is a perspective view of the recording portion 9 and a maintenance unit 19.
Fig. 8 is a perspective view showing the arrangement of an ink collection tray 80 during recovery operation.
Fig. 9 is an enlarged part view, during recovery operation, of the recording head 17b and the ink collection tray 80 as seen in a plan view along the sheet conveying direction.
Fig. 10 is a plan view, as seen from above, of the part enclosed by a two-dot chain line in Fig. 9.
Fig. 11 is an enlarged sectional part view showing the part enclosed by the two-dot chain line in Fig. 9.
Fig. 12 is an enlarged sectional view showing around a detection portion 86 in a state where the liquid surface LS has reached a detection height h1.
Fig. 13 is an enlarged sectional view showing around the detection portion 86 in a state where liquid L1 is flowing into the second depressed portion 97.
Fig. 14 is an enlarged sectional view showing around the detection portion 86 in a state where the liquid L1 that has flowed into the second depressed portion 97 is in contact with a sensing portion 94a.
Fig. 15 is an enlarged sectional part view showing around the detection portion 86 in a maintenance unit 19 according to a second embodiment.

### DETAILED DESCRIPTION

### [1. Outline of the construction of a printer 100]

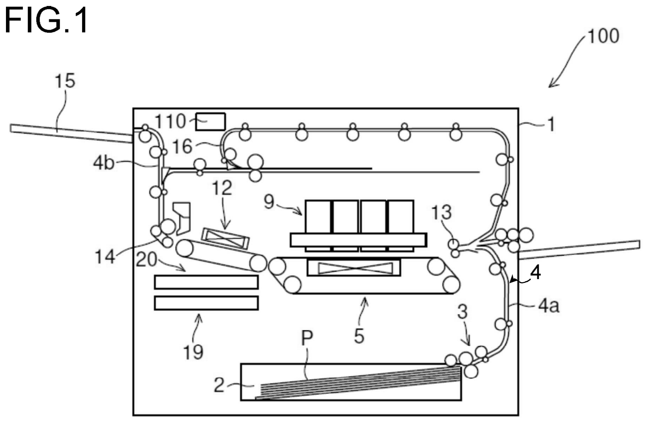

A first embodiment of the present disclosure will be described below with reference to the accompanying drawings. Fig. 1 is a side sectional view showing an outline of the construction of a printer 100 according to the first embodiment of the present disclosure. The printer 100 is an inkjet printer (one example of an inkjet recording apparatus). As shown in Fig. 1, the printer 100 includes a sheet feed cassette 2, a sheet feed device 3, a sheet conveying passage 4, a pair of registration rollers 13, a first conveying unit 5, a recording portion 9, a second conveying unit 12, a decurler portion 14, a sheet discharge tray 15, a maintenance unit 19, and a cap unit 20.

The sheet feed cassette 2 is a sheet storage portion that stores sheets in it. The sheet feed cassette 2 is disposed in a lower part of the body of the printer 100. In the sheet feed cassette 2, sheets P as one example of a recording medium are stored.

The sheet feed device 3 is disposed downstream of the sheet feed cassette 2 in the sheet conveying direction (i.e., to the upper right of the sheet feed cassette 2 in Fig. 1). The sheet feed device 3 separates and feeds out one sheet after another from the stack of sheets P in the sheet feed cassette 2 downstream in the sheet conveying direction (more specifically, into a first sheet conveying passage 4a, which will be described later).

The sheet conveying passage 4 is a conveying passage for sheets P provided in the printer 100. The sheet conveying passage 4 includes a first sheet conveying passage 4a, a reversing conveying passage 16, and a second sheet conveying passage 4b. The pair of registration rollers 13 and the decurler portion 14 are disposed midway along the sheet conveying passage 4.

The first sheet conveying passage 4a is located ahead in the sheet feed direction with respect to the sheet feed cassette 2 (i.e., downstream in the sheet conveying direction, to the upper right in Fig. 1). The first sheet conveying passage 4a extends vertically upward along a side face of the printer 100. The downstream end of the first sheet conveying passage 4a in the sheet conveying direction is connected to the pair of registration rollers 13 and the reversing conveying passage 16. The first sheet conveying passage 4a conveys the sheet P fed out from the sheet feed cassette 2 to the pair of the registration rollers 13.

The pair of registration rollers 13 corrects a skew of the conveyed sheet P and, with predetermined timing (i.e., the timing of the ink ejection operation performed by the recording portion 9), feeds out the sheet P toward the first conveying unit 5 (in particular, toward a first conveying belt 8, which will be described later). When an image is formed on the back side of the sheet P, the pair of registration rollers 13 receives the sheet P from the first conveying unit 5 to convey it to the reversing conveying passage 16.

The second sheet conveying passage 4b is disposed downstream of the decurler portion 14 in the sheet conveying direction. The second sheet conveying passage 4b feeds out the sheet P fed from the decurler portion 14 to the sheet discharge tray 15 or to the reversing conveying passage 16. Specifically, when the sheet P is subjected to duplex recording, the second sheet conveying passage 4b feeds it out to the reversing conveying passage 16. On the other hand, when the sheet P is not subjected to duplex recording, the second sheet conveying passage 4b feeds it out to the discharge tray 15.

One end of the reversing conveying passage 16 (the upstream end in the sheet conveying direction) is connected to the second sheet conveying passage 4b. The other end of the reversing conveying passage 16 (the downstream end in the sheet conveying direction) is connected to the pair of registration rollers 13. The reversing conveying passage 16 feeds the sheet P fed from the second sheet conveying passage 4b back to the pair of registration rollers 13 with its front and back sides reversed.

The first conveying unit 5 and the recording portion 9 are disposed closely downward of the pair of registration rollers 13 in the sheet conveying direction. The first conveying unit 5 includes the first conveying belt 8, a driving roller 6a, and a driven roller 6b.

The first conveying belt 8 is an endless belt. The first conveying belt 8 is stretched across a plurality of rollers including the driving roller 6a and the driven roller 6b under a predetermined tension. As the driving roller 6a rotates, the first conveying belt 8 rotates with the frictional force between the driving roller 6a and the first conveying belt 8. The first conveying belt 8 conveys the sheet P having an image formed on it to the second conveying unit 12.

The first conveying belt 8 conveys the sheet P fed to it by the pair of registration rollers 13 to a position facing the recording portion 9 (in particular, recording heads 17a to 17c, which will be described later). The first conveying belt 8 then feeds out the sheet P having the image formed on it by the recording portion 9 to the second conveying unit 12.

The recording portion 9 is disposed above the first conveying belt 8. The recording portion 9 ejects ink onto the sheet P at the position facing it. This records an image on the sheet P. The ejection of ink in the recording portion 9 is controlled by a control portion 110 in the printer 100. The configuration of the recording portion 9 will be described in detail later.

The second conveying unit 12 is disposed downstream (left in Fig. 1) of the first conveying unit 5 in the sheet conveying direction. The second conveying unit 12 receives the sheet P having the image recorded on it by the recording portion 9 and feeds it out to the decurler portion 14. The ink ejected onto the surface of the sheet P dries while it passes through the second conveying unit 12.

The decurler portion 14 receives the sheet P fed from the second conveying unit 12 and decurls curls in the sheet P. The decurler portion 14 feeds out the sheet P to the second sheet conveying passage 4b.

The maintenance unit 19 and the cap unit 20 are disposed below the second conveying unit 12. When purging is performed, the maintenance unit 19 moves horizontally to below the recording portion 9, wipes off the ink pushed out from the recording portion 9 (more specifically, from ink ejection ports 18 in the recording heads 17a to 17c, which will be described later), and collects the wiped-off ink. Purging refers to operation of forcibly pushing ink out of the ink ejection ports 18 in the recording heads 17a to 17c to discharge thickened ink, foreign matter, and air bubbles in the ink ejection ports 18.

When capping of ink ejection surfaces F1 of the recording heads 17a to 17c is performed, the cap unit 20 moves horizontally to below the recording portion 9 and then upward to be attached to the lower face of the recording heads 17a to 17c.

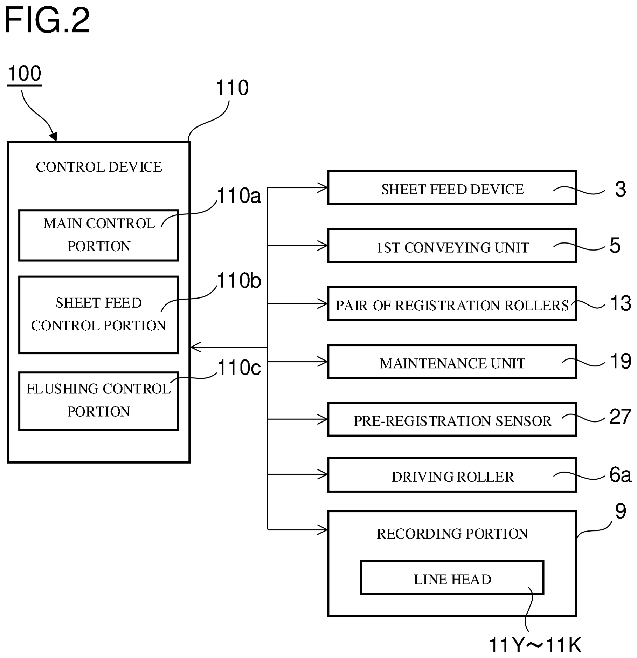

Next, the control portion 110 will be described. Fig. 2 is a block diagram showing the configuration of the control portion 110. The control portion 110 is configured to include, for example, a CPU (central processing unit) and memory. Specifically, as shown in Fig. 2, the control portion 110 includes a main control portion 110a, a sheet feed control portion 110b, and a flushing control portion 110c. Furthermore, the control portion 110 is electrically connected to different devices in the printer 100 (see Fig. 2) and is configured to be able to control the operation of different parts of the printer 100.

The main control portion 110a controls the driving of different rollers in the printer 100, the driving of the driving roller 6a (the conveying speed of the sheet P), the ejection of ink from the recording portion 9 during image recording, and the like. The sheet feed control portion 110b controls the pair of registration rollers 13 and the sheet feed device 3. For example, based on the detection timing of the sheet P by a sheet detection sensor (e.g., a pre-registration sensor 27) provided in the sheet conveying passage 4, the sheet feed control portion 110b controls the pair of registration rollers 13. This controls the timing of the conveyance of the subsequent sheet P. The flushing control portion 110c controls the recording portion 9 and the first conveying unit 5 to perform flushing (including recovery operation, which will be described later).

### [2. Detailed configuration of the recording portion 9]

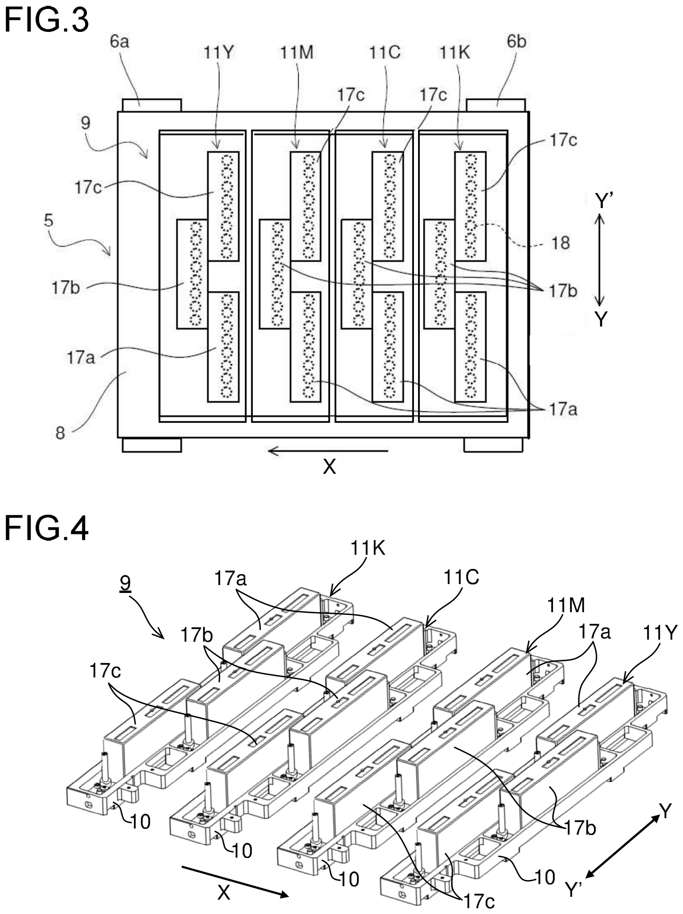

Fig. 3 is a plan view of the recording portion 9. Fig. 4 is a perspective view of the recording portion 9 as seen from above. As shown in Figs. 3 and 4, the recording portion 9 includes line heads 11Y, 11M, 11C, and 11K. The line heads 11Y to 11K are disposed at a predetermined interval (e.g., 1 mm) along the height direction relative to the conveying surface of the first conveying belt 8. The driving roller 6a drives the first conveying belt 8 to run in the conveying direction of the sheet P (the direction of arrow X).

Each of the line heads 11Y to 11K has the recording heads 17a to 17c. The recording heads 17a to 17c in each of the line heads 11Y to 11K are held in a head housing 10. From the line heads 11Y to 11K, through the recording heads 17a to 17c (more specifically, through the ink ejection ports 18 in the recording heads 17a to 17c, which will be described later), inks (water-based inks in this embodiment) of different colors of yellow (Y), magenta (M), cyan (C), and black (K) are ejected.

The recording heads 17a to 17c are arranged in a staggered pattern along the sheet width direction (the direction of arrow YY') that intersects the sheet conveying direction (the direction of arrow X). The recording heads 17a to 17c are respectively fed with inks of four colors (yellow, magenta, cyan, and black) stored in ink tanks (not illustrated), corresponding to the colors of the line heads 11Y to 11K.

Based on control signals from the main control portion 110a, the recording heads 17a to 17c eject ink from their tip ends (more specifically, from the ink ejection ports 18, which will be described later) toward the sheet P on the first conveying belt 8. This forms, on the sheet P, a color image having yellow, magenta, cyan, and black inks overlaid on each other.

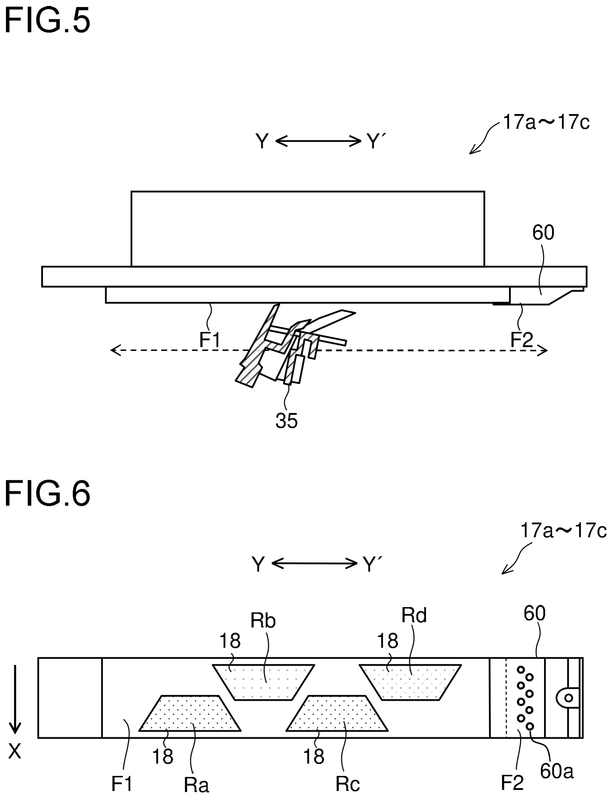

Fig. 5 is a side view of the recording heads 17a to 17c. Fig. 6 is a plan view of the recording heads 17a to 17c as seen from the ink ejection surface F1 side. The recording heads 17a to 17c have the same shape and configuration, and are thus shown in a common diagram in Figs. 5 and 6. The following description focuses on the recording head 17b and, for the recording heads 17a and 17c, no overlapping description will be repeated.

As shown in Figs. 5 and 6, the recording head 17b has the ink ejection surface F1, a plurality of ink ejection ports 18 (nozzles), and a cleaning liquid supply surface F2.

The ink ejection surface F1 is the surface located at the tip end of the recording head 17b. The ink ejection surface F1 is a flat surface parallel to horizontal directions (the sheet width direction and the sheet conveying direction). The ink ejection ports 18 are formed in the ink ejection surface F1. The ink ejection ports 18 are arrayed at equal intervals along the intersecting direction (the direction of arrow YY').

The ink ejection surface F1 is made of, for example, SUS (stainless steel). Furthermore, a water-repellent film (not illustrated) is formed on the ink ejection surface F1. The ink ejection surface F1 is provided with a plurality (here, four blocks) of nozzle regions Ra to Rd. A large number of ink ejection ports 18 (see Fig. 3) are arranged in each of the nozzle regions Ra to Rd. In Fig. 6, the nozzle ejection ports 18 are indicated by a large number of tiny dots.

The cleaning liquid supply surface F2 is the surface located at the tip end of the recording head 17b. The cleaning liquid supply surface F2 is located at one end of the recording head 17b along the longitudinal direction (horizontal direction). The cleaning liquid supply surface F2 is adjacent to the ink ejection surface F1 in the sheet conveying direction. The cleaning liquid supply surface F2 is provided with a cleaning liquid supply portion 60. The cleaning liquid supply portion 60 supplies cleaning liquid, as will be described in more detail below.

The cleaning liquid supply portion 60 is provided with a large number of cleaning liquid supply ports 60a. The cleaning liquid supply ports 60a are connected to a cleaning liquid storage tank (not illustrated). During recovery operation, which will be described later, the cleaning liquid is supplied from the cleaning liquid storage tank to the cleaning liquid supply surface F2 through the cleaning liquid supply ports 60a.

### [3. Detailed configuration of the maintenance unit 19]

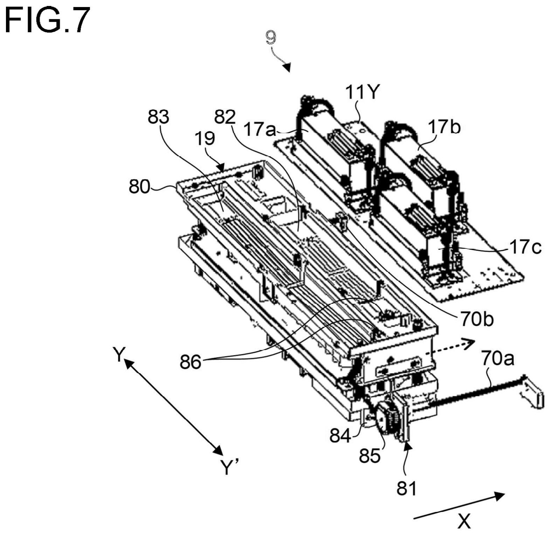

Fig. 7 is a perspective view of the recording portion 9 and the maintenance unit 19. While Fig. 7 shows only the line head 11Y out of the line heads 11Y to 11K and the following description focuses on the relationship between the line head 11Y and the maintenance unit 19, a similar configuration and relationship apply to the line heads 11M to 11K.

As shown in Fig. 7, when flushing is performed, the maintenance unit 19 is disposed below the line heads 11Y to 11K. Meanwhile, the maintenance unit 19 performs recovery operation on each of the recording heads 17a to 17c in the line heads 11Y to 11K. Specifically, the operation proceeds as follows.

The maintenance unit 19 includes a drive mechanism 81, an ink collection tray 80, a wiper 35 (one example of a cleaning portion; see Fig. 5), and a detection portion 86.

The drive mechanism 81 includes guide rails 70a and 70b, a drive transmission portion 84, and a drive source 85.

The guide rails 70a and 70b are parallel to the sheet conveying direction (the direction of arrow X). The guide rails 70a and 70b are fixed at positions below the recording portion 9. The guide rail 70a is coupled to one end (the end at side Y' of arrow YY' indicated in the figure) of the ink collection tray 80 along the horizontal direction. The guide rail 70b is coupled to the other end (the end at side Y of arrow YY' indicated in the figure) of the ink collection tray 80 along the horizontal direction. The guide rails 70a and 70b guide the movement of the ink collection tray 80 in the sheet conveying direction.

The drive transmission portion 84 is configured with a plurality of gears and the like. The drive source 85 is a driving device such as a motor. The drive transmission portion 84 is connected to the ink collection tray 80 and the drive source 85. The drive transmission portion 84 transmits a rotational driving force output by the drive source 85 to the ink collection tray 80.

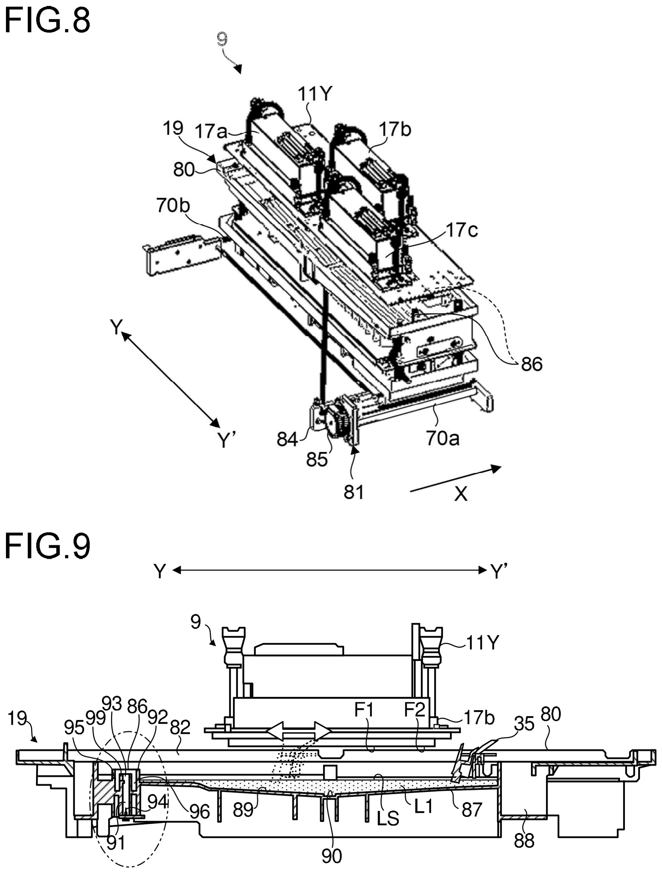

Fig. 8 is a perspective view showing the arrangement of the ink collection tray 80 during recovery operation. The ink collection tray 80 can store liquid containing ink and cleaning liquid. As shown in Figs. 7 and 8, under the rotational driving force, the ink collection tray 80 can reciprocate between a first and a second position along the sheet conveying direction (the direction of arrow X indicated in the figure).

The first position is a position directly below the recording portion 9 (more specifically, the recording heads 17a to 17c) (the position in Fig. 8). The second position is a position displaced horizontally (in the sheet conveying direction) from the first position and retracted from directly below the recording portion 9 (more specifically, the recording heads 17a to 17c) (the position in Fig. 7). The configuration of the ink collection tray 80 will be described in detail later.

Fig. 9 is an enlarged part view, during recovery operation, of the recording head 17b and the ink collection tray 80 as seen in a plan view along the sheet conveying direction. As shown in Fig. 9, the wiper 35 is disposed above the ink collection tray 80. More specifically, wipers 35 are disposed respectively above water storage portions 87 in a first and a second collection portions 82 and 83, which will be described later.

During recovery operation, which will be described later, the wiper 35 is disposed between the ink collection tray 80 and the recording portion 9. The wiper 35 is connected to a drive source (such as a motor) (illustration omitted). The wiper 35 is supported so as to reciprocate horizontally (the direction of arrow YY') under a driving force from the drive source.

The detection portion 86 is provided in the ink collection tray 80 (more specifically, two of them respectively in the first and second collection portions 82 and 83, which will be described later). The detection portion 86 is configured to detect the amount of liquid L1 (details will be given later) stored in the ink collection tray 80 exceeding a predetermined amount (hereinafter referred to also as the "emergency amount"). The configuration of the detection portion 86 will be described in detail later.

### [4. Recovery operation]

The printer 100 performs recovery operations on the recording heads 17a to 17c when starting printing after a long period of inactivity and during intervals between printing sessions in preparation for subsequent printing. Recovery operation is operation for cleaning the ink ejection surfaces F1 of the recording heads 17a to 17c. Specifically, the operation proceeds as follows. Here, only the recovery operation for the recording head 17b is described, and for the recording heads 17a and 17c, no overlapping description will be repeated.

First, the flushing control portion 110c outputs an instruction to perform recovery operation. Then, the drive mechanism 81 places the ink collection tray 80 at the first position (see Fig. 8). The drive mechanism 81 then moves the ink collection tray 80 upward. As a result, the wiper 35 makes contact with the ink ejection surface F1 (see Fig. 5). The wiper 35 then performs wiping operation. Specifically, the operation proceeds as follows.

Ink is pushed out of the ink ejection ports 18 (purging). At the same time, cleaning liquid is supplied from the cleaning liquid supply ports 60a to the cleaning liquid supply surface F2. Then, the wiper 35 in contact with the ink ejection surface F1 reciprocates horizontally (along the direction of arrow YY') across the ink ejection surface F1 (see Fig. 5). In other words, meanwhile, the wiper 35 slides across the ink ejection surface F1 and across the cleaning liquid supply surface F2.

The ink pushed out onto the ink ejection surface F1 in wiping operation is wiped off by the wiper 35 together with the cleaning liquid. The wiped-off ink and cleaning liquid fall downward to be collected in the ink collection tray 80 (see Fig. 9).

The ink collection tray 80 (more specifically, the water storage portion 87, which will be described later) is previously loaded with water. The fallen ink and cleaning liquid are stored in the ink collection tray 80 (more specifically, in the water storage portion 87, which will be described later) in the form of liquid L1 mixed with the water there. In the liquid L1, the ink and the cleaning liquid may each be dissolved in water, or may remain undissolved and separated.

When wiping operation is complete, the printer 100 goes into a state in which recovery operation is not in progress. Specifically, the drive mechanism 81 moves the ink collection tray 80 downward. The drive mechanism 81 then places the ink collection tray 80 at the second position (see Fig. 7).

### [5. Detailed configuration of the ink collection tray 80 and the detection portion 86]

As shown in Figs. 7 to 9, the ink collection tray 80 includes the first and second collection portions 82 and 83. When recovery operation is in progress, the first collection portion 82 faces the ink ejection surface F1 of the recording head 17b. When recovery operation is in progress, the second collection portion 83 faces the ink ejection surfaces F1 of the recording heads 17a and 17c.

Each of the first and second collection portions 82 and 83 includes the water storage portion 87 and a waste liquid tray 88. The water storage portion 87 is located below the recording head 17b. The water storage portion 87 receives the ink and cleaning liquid that have fallen in wiping operation and stores them in the form of the liquid L1. As described above, the water storage portion 87 is previously loaded with water.

The water storage portion 87 is connected to a waste liquid discharge passage (illustration omitted). The waste liquid discharge passage is connected to the waste liquid tray 88. When the amount of liquid L1 stored in the water storage portion 87 exceeds a predetermined amount (referred to also as a discharge reference amount), the excess liquid L1 is discharged to the waste liquid tray 88 through the waste liquid discharge passage. The discharge reference amount is the amount reached while the liquid surface of the liquid L1 is at a level below a detection height h1, which will be described later.

The detailed configuration of the water storage portion 87 is as follows. The water storage portion 87 has an inclined surface 89 and a bottom groove portion 90. The inclined surface 89 is a surface that is inclined downward from its opposite ends toward the middle along the horizontal direction. The bottom groove portion 90 is connected to each of a pair of inclined surfaces 89 at a position between the pair of inclined surfaces 89. The pair of inclined surfaces 89 and the bottom groove portion 90 form substantially a V-shape, with the bottom groove portion 90 as the bottom.

The detection portion 86 is provided in each of the first and second collection portions 82 and 83. The detection portion 86 detects the amount of liquid L1 stored in the water storage portion 87 exceeding the emergency amount. The emergency amount is the amount at which the liquid surface LS of the liquid L1 stored in the water storage portion 87 reaches a detection height h1, which will be described later. The detection portion 86 in the first collection portion 82 detects the amount of water stored in the water storage portion 87 in the first collection portion 82, and the detection portion 86 in the second collection portion 83 detects the amount of water stored in the water storage portion 87 in the second collection portion 83.

The detection portion 86 inputs a detection signal including the detection result to the main control portion 110a. In response to the detection signal from the detection portion 86, the main control portion 110a conveys the detection result to the operation screen on the printer 100 and to an externally connected device such as a PC.

If the waste liquid discharge passage connected to the water storage portion 87 becomes blocked due to an ink clog or the like, the amount of liquid L1 in the water storage portion 87 increases beyond the discharge reference amount. When the storage amount reaches the emergency amount, as described above, the detection portion 86 detects this.

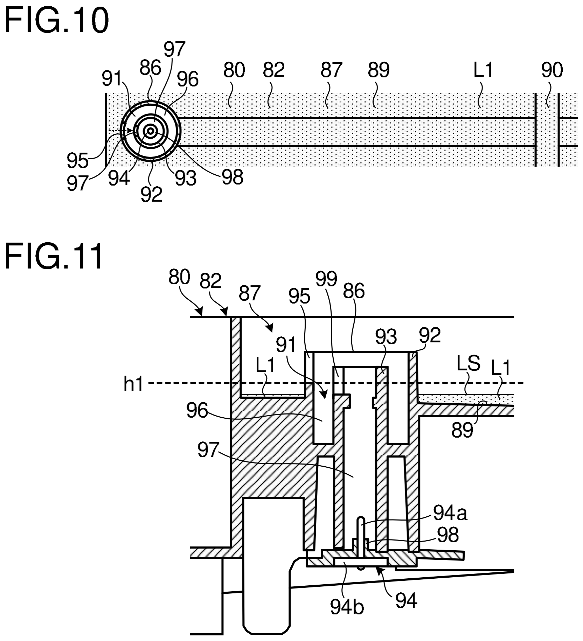

Fig. 10 is a plan view, as seen from above, of the part enclosed by a two-dot chain line in Fig. 9. Fig. 11 is an enlarged sectional part view showing the part enclosed by the two-dot chain line in Fig. 9. As shown in Figs. 9 to 11, the detection portion 86 is provided close to one end of the inclined surface 89 along the horizontal direction (the direction of arrow YY').

The detection portion 86 includes a detection depressed portion 91, a first wall portion 92, a second wall portion 93, and a sensor portion 94. The detection depressed portion 91 is a cylindrical depressed portion formed to extend downward from the inclined surface 89. The configuration of the detection depressed portion 91 will be described in detail later.

The first wall portion 92 is a wall (rib) that rises from the inclined surface 89. The first wall portion 92 is provided to surround the detection depressed portion 91. In other words, the first wall portion 92 is a rib in a cylindrical shape that fits around the opening edge of the detection depressed portion 91.

A first inlet 95 is formed in a part of the side face of the first wall portion 92 opposite from the recording head 17b along the horizontal direction. In other words, the first inlet 95 is formed in a part of the side face of the first wall portion 92 that is farthest from the recording head 17b (more specifically, the ink ejection surface F1) along the horizontal direction and that faces the opposite ends of the inclined surface 89 along the horizontal direction.

The first inlet 95 may also be understood as a cut-out portion that is cut out downward from the upper end of the first wall portion 92 by a predetermined height. The first inlet 95 has a rectangular shape as seen in a plan view from left in Fig. 8. The position of the first inlet 95 (the position of the bottom of the first inlet 95) is equal to the detection height h1. When the liquid surface LS in the water storage portion 87 reaches the detection height h1, the liquid L1 flows through the first inlet 95, over the first wall portion 92, into the detection depressed portion 91. The amount of stored liquid L1 and the flow of the liquid L1 will be described in detail later.

The detection depressed portion 91 includes a first depressed portion 96 and a second depressed portion 97. The first depressed portion 96 is surrounded by the first wall portion 92. The first depressed portion 96 is a depressed portion that extends downward from the inclined surface 89. The second depressed portion 97 is provided inside the first depressed portion 96. The second depressed portion 97 is a depressed portion that extends downward from the first depressed portion 96. A step portion 98 is formed on the bottom of the second depressed portion 97. The step portion 98 protrudes a predetermined height from the deepest part of the second depressed portion 97. The end face of the step portion 98 is flat.

The second wall portion 93 is a wall (rib) provided between the first and second depressed portions 96 and 97. The second wall portion 93 is formed in a cylindrical shape so as to surround the second depressed portion 97 and fit around the opening edge of the second depressed portion 97. The second wall portion 93 separates between the first and second depressed portions 96 and 97. That is, the second wall portion 93 forms a double depressed portion, with the first depressed portion 96 outside and the second depressed portion 97 inside.

A second inlet 99 is formed in the second wall portion 93. The second inlet 99 may also be understood as a cut-out portion that is cut out downward from the upper end of the second wall portion 93. The second inlet 99 has a rectangular shape as seen in a plan view from left in Fig. 8. The position of the second inlet 99 (the position of the bottom of the second inlet 99) is below the detection height h1.

The sensor portion 94 is provided in the second depressed portion 97, at a position below the detection height h1. In other words, the second depressed portion 97 is housed in the sensor portion 94. The sensor portion 94 is configured to detect contact with the liquid L1 flowing into the second depressed portion 97. The detailed configuration of the sensor portion 94 is as follows.

The sensor portion 94 includes a sensing portion 94a and a sensor base plate 94b. The sensing portion 94a is a pair of rod-shaped members (i.e., electrode needles) made of a conductive material (illustration omitted). The sensing portion 94a is provided at the center of the step portion 98. The sensing portion 94a penetrates the step portion 98 along the top-bottom direction. The upper end of the sensing portion 94a is located in the detection depressed portion 91 (the second depressed portion 97). The lower end of the sensing portion 94a is located outside the detection depressed portion 91. The sensing portion 94a is electrically connected to the sensor base plate 94b.

The sensor base plate 94b is configured to be able to electrically communicate with the sensing portion 94a. The sensor base plate 94b can detect contact of the liquid L1 with the sensing portion 94a. The sensor base plate 94b (more specifically, a processor mounted on the sensor base plate 94b) transmits the detection state of the sensing portion 94a to the control portion 110 (more specifically, the main control portion 110a).

When conductive water (here, liquid L1) makes contact with the sensing portion 94a, the liquid L1 forms a conduction path between the pair of electrode needles. This brings the pair of needles into a conducting state. The sensor base plate 94b continuously feeds a weak current to the sensing portion 94a and thus when the pair of electrode needles come into a conducting state, a current flows between them. By detecting the current flowing between the pair of electrode needles, the sensor base plate 94b detects contact of the liquid L1 with the sensing portion 94a.

### [6. Detection of the liquid L1]

Next, the method for detecting the amount of liquid L1 stored in the water storage portion 87 exceeding the emergency amount will be described in detail. As shown in Fig 11, when the liquid surface LS is at a level below the detection height h1, the liquid surface LS is at a level below the bottom of the first inlet 95. Thus, the liquid L1 is blocked by the first wall portion 92 and does not flow into the detection depressed portion 91.

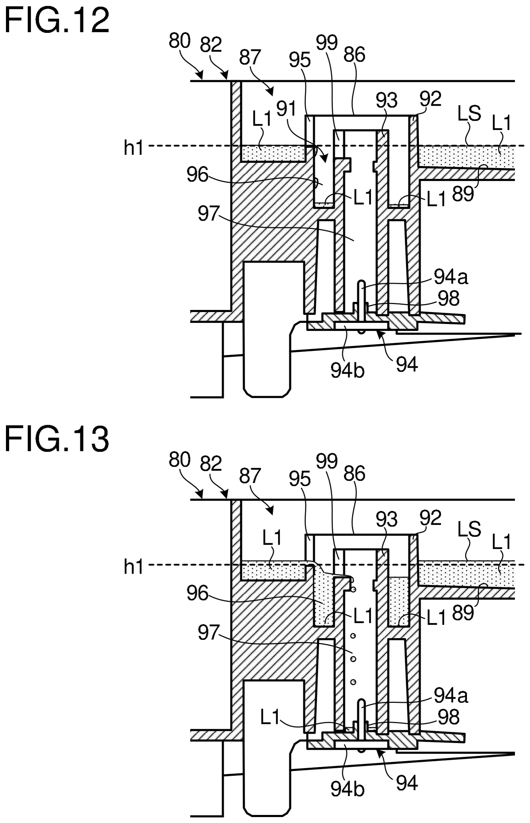

Fig. 12 is an enlarged sectional view showing around the detection portion 86 in a state where the liquid surface LS has reached the detection height h1. As shown in Fig. 12, when the liquid L1 in the water storage portion 87 reaches the emergency amount and the liquid surface LS reaches the detection height h1, the liquid L1 flows through the first inlet 95 into the detection depressed portion 91. At this time, the liquid L1 first flows into the first depressed portion 96.

Fig. 13 is an enlarged sectional view showing around the detection portion 86 in a state where the liquid L1 is flowing into the second depressed portion 97. When the amount of liquid L1 stored in the first depressed portion 96 increases from the state in Fig. 12, as shown in Fig. 13, the liquid L1 eventually overflows out of the first depressed portion 96. The liquid L1 then flows into the second depressed portion 97 through the second inlet 99. The liquid L1 that flows into the second depressed portion 97 is stored in a bottom part of the second depressed portion 97.

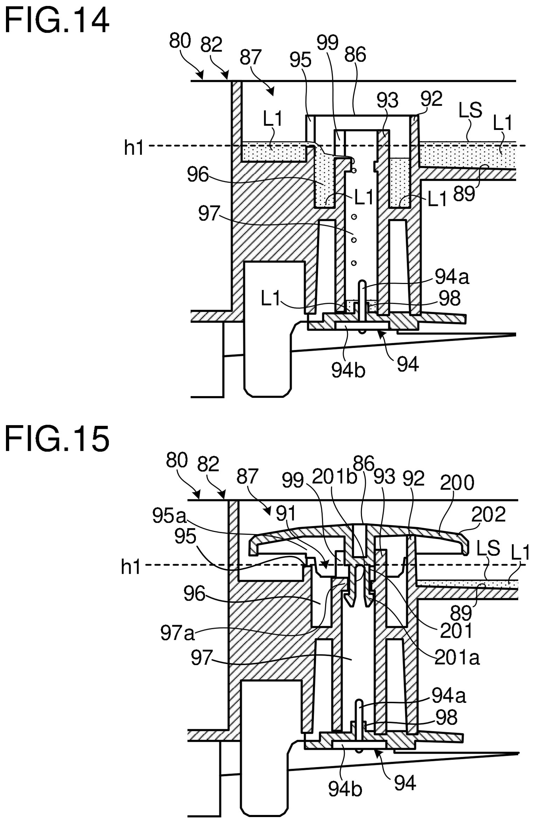

Fig. 14 is an enlarged sectional view showing around the detection portion 86 in a state where the liquid L1 that has flowed into the second depressed portion 97 is in contact with the sensing portion 94a. When the amount of liquid L1 stored in the second depressed portion 97 increases from the state in Fig. 13 until the liquid surface of the liquid L1 in the second depressed portion 97 exceeds the step portion 98, the liquid L1 makes contact with the sensing portion 94a. As a result, the sensor base plate 94b detects contact of the sensing portion 94a with the liquid L1. This transmits the detection signal from the sensor base plate 94b to the control portion 110 (more specifically, to the main control portion 110a).

As described above, when the liquid surface LS reaches the detection height h1, the detection portion 86 detects the liquid L1 in the water storage portion 87 being the emergency amount. Thus, even if the ink discharge passage is blocked, the liquid L1 is prevented from overflowing out of the ink collection tray 80.

As described above, the detection portion 86 is provided at one end of the water storage portion 87 along the sheet width direction (the direction of arrow YY'). Furthermore, the first inlet 95 is formed in a part of the side face of the first wall portion 92 that is farthest from the recording head 17b (the ink heads 17a and 17c) along the horizontal direction. In other words, the first inlet 95 is located far from the bottom groove portion 90 along the horizontal direction. Thus, even if ink or cleaning liquid falling from the ink ejection surface F1 splashes on the liquid surface LS, or even if the liquid L1 is shaken by vibration or the like, the splashed liquid L1 is prevented from unexpectedly entering the first inlet 95. This helps prevent false detection by the detection portion 86 resulting from splashing of ink or the like.

As described above, the detection depressed portion 91 is a double depressed portion with the first and second depressed portions 96 and 97. And the sensor portion 94 (sensing portion 94a) is provided in the second depressed portion 97. Suppose that, with the liquid L1 in the water storage portion 87 not yet having reached the emergency amount, the liquid L1 flows into the detection depressed portion 91 through the first inlet 95 due to the liquid L1 being shaken by splashing or vibration. Even then, the liquid L1 remains stored in the first depressed portion 96 and does not flow into the second depressed portion 97. This helps more effectively prevent false detection by the detection portion 86.

As described above, the step portion 98 is provided on the bottom of the second depressed portion 97. Suppose that, with the liquid L1 in the water storage portion 87 not yet having reached the emergency amount, a small amount of liquid L1 enters the second depressed portion 97 due to the liquid L1 being shaken by splashing or vibration. Even then, the liquid L1 remains stored at a level below the step portion 98. This helps more effectively prevent false detection by the detection portion 86.

### [7. Printer 100 of a second embodiment]

Next, a printer 100 according to a second embodiment will be described. The following description focuses on the differences from the first embodiment; parts similar to those in the first embodiment are given the reference signs and no overlapping description will be repeated.

Fig. 15 is an enlarged sectional part view showing around the detection portion 86 in a maintenance unit 19 according to the second embodiment. As shown in Fig. 15, the maintenance unit 19 according to the second embodiment includes a cover member 200. The cover member 200 is disposed so as to cover the detection depressed portion 91. Details are given below.

The cover member 200 has an inserted portion 201 and an umbrella portion 202. The inserted portion 201 is in a rod shape that extends along the top-bottom direction. The inserted portion 201 is inserted in the second depressed portion 97.

The inserted portion 201 has a claw portion 201a at its lower end. On an upper end part of the second depressed portion 97, a protrusion 97a is formed that protrudes horizontally inward of the second depressed portion 97. The claw portion 201a is engaged with the protrusion 97a on the upper end part of the second depressed portion 97. The engagement between the claw portion 201a and the protrusion 97a is achieved by what is called a snap-fit structure. This snap-fit structure allows the cover member 200 to be fitted in the detection depressed portion 91 (more specifically, in the second depressed portion 97).

An opening 201b is formed in the inserted portion 201. The opening 201b is a through hole that penetrates the inserted portion 201 along its thickness direction. The opening 201b communicates with the internal space of the second depressed portion 97. Furthermore, the second inlet 99 communicates with the opening 201b. Thus, the liquid L1 passing through the second inlet 99 flows into the second depressed portion 97 through the opening 201b.

The umbrella portion 202 is connected to the upper end of the inserted portion 201. As seen in a plan view from above, the umbrella portion 202 is formed in a circular shape with the inserted portion 201 at its center. The lower end of the umbrella portion 202 is located above the detection height h1. The first inlet 95 of this embodiment is an opening defined by the lower end of the umbrella portion 202 and a cut-out depressed portion 95a (a depressed portion corresponding to the first inlet 95 in the first embodiment) provided at the upper end of the first wall portion 92. A bottom part of the cut-out depressed portion 95a faces the back surface of the umbrella portion 202. That is, above the first inlet 95 in this embodiment, the back surface of the umbrella portion 202 is located.

The maintenance unit 19 according to the embodiment can more effectively prevent false detection by the detection portion 86. Specifically, even if ink or the like splashes or even if the liquid L1 in the water storage portion 87 is shaken by vibration or the like, the umbrella portion 202 can prevent the liquid L1 from entering the detection depressed portion 91. This helps more effectively prevent false detection by the detection portion 86.

The embodiments described above are not meant to limit the scope of the present disclosure, which thus allows for any modifications without departure from the spirit of what is disclosed herein. For example, the number of ink collection trays 80 and their arrangement direction are not particularly limited, and may be appropriately determined according to the number of recording heads disposed in each of the line heads 11Y to 11K.

The present disclosure is applicable to an inkjet recording apparatus provided with an ink collection tray that receives ink pushed out from an ink ejection surface of a recording head. According to the present disclosure, it is possible to provide an inkjet recording apparatus that can prevent false detection of a clog with waste liquid discharged from an ink collection tray.

## Claims

1. An inkjet recording apparatus comprising:
a recording head having an ink ejection surface from which ink is ejected;
an ink collection tray disposed at a position facing the ink ejection surface during recovery operation for the recording head, the ink collection tray being able to store liquid containing the ink falling from the recording head; and
a detection portion that detects a liquid surface of the liquid stored in the ink collection tray exceeding a predetermined detection height,
**characterized in that**
the detection portion has:
a detection depressed portion that extends downward from an upper surface of the ink collection tray;
a sensor portion provided at a position below the detection height in the detection depressed portion, the sensor portion detecting contact thereof with the liquid flowing into the detection depressed portion; and
a first wall portion that is formed to surround the detection depressed portion, the first wall portion preventing the liquid from entering the detection depressed portion from the ink collection tray, and
the first wall portion has an inlet formed at the detection height to allow the liquid to flow from the ink collection tray to the detection depressed portion.

2. The inkjet recording apparatus according to claim 1, **characterized in that**
the detection depressed portion has:
a first depressed portion located inside the first wall portion, the first depressed portion being able to store the liquid therein;
a second depressed portion located inside the first depressed portion, the second depressed portion housing the sensor portion therein; and
a second wall portion located between the first and second depressed portions, the second wall portion preventing the liquid from entering the second depressed portion from the first depressed portion until a liquid surface of the liquid stored in the first depressed portion reaches a predetermined height.

3. The inkjet recording apparatus according to claim 1, further comprising:
a cover member that covers above the detection depressed portion,
**characterized in that**
the first wall portion has formed therein a cut-out depressed portion depressed downward from an upper end of the first wall portion to the detection height, a bottom part of the cut-out depressed portion facing the cover member along a top-bottom direction, and
the inlet is defined by the cut-out depressed portion and the cover member.

4. The inkjet recording apparatus according to claim 1, further comprising
a cleaning portion disposed between the ink ejection surface and the ink collection tray during the recovery operation, the cleaning portion sliding across the ink ejection surface along a longitudinal direction of the ink ejection surface to make the ink on the ink ejection surface fall onto the ink collection tray,
**characterized in that**
the detection depressed portion is located outward of the ink ejection surface along the longitudinal direction, and
the inlet is located in a part of the first wall portion opposite from the ink ejection surface along the longitudinal direction.

5. The inkjet recording apparatus according to claim 1, **characterized in that**
the ink collection tray is inclined downward from opposite ends thereof toward a middle thereof, and
the detection portion is located close to one of the opposite ends.

6. The inkjet recording apparatus according to claim 5, **characterized in that** the inlet is formed in a side face of the first wall portion facing the opposite ends.
